# EUROPÄISCHE PATENTSCHRIFT

(11) **EP 1 918 055 B1**
(45) Veröffentlichungstag und Bekanntmachung des Hinweises auf die Patenterteilung: **14.04.2010**
(21) Anmeldenummer: 07033529.4
(22) Anmeldetag: 20.10.2007
(51) Int. Cl.: B23K 7/10, G05D 16/18

(54) **Verfahren und Einrichtung zum Betreiben einer Brennschneidmaschine zum Brennschneiden von Gießsträngen und Werkstücken**
Method and device for operating a gas cutting machine for gas cutting of cast strands and workpieces
Procédé et dispositif de fonctionnement d'un oxycoupeuse pour l'oxycoupage de tronçons de coulée et de pièces à usiner

(30) Priorität: 30.10.2006 DE 102006051044
(43) Veröffentlichungstag der Anmeldung: 07.05.2008
(73) Patentinhaber: Aute AG Gesellschaft für autogene Technik, 2068 Hauterive (CH)
(72) Erfinder: Lotz, Horts K., 2068 Hauterive (CH)
(74) Vertreter: Aue, Hans-Peter

(56) Entgegenhaltungen:
- EP-A- 0 188 763
- EP-A- 0 532 789
- WO-A-93/11391
- DE-A1- 4 018 066
- US-A- 3 119 409

## Beschreibung

Die Erfindung bezieht sich auf ein Verfahren zum Betreiben einer Sauerstoff-Brennschneidmaschine zum Brennschneiden von Gießsträngen und Werkstücken aus Stahl in kaltem und heißem Zustand in oder nach Stahl-Stranggießanlagen für Blöcke und Brammen.

Zur Weiterverarbeitung in transportable und den Endprodukten entsprechende Längen müssen endlos vergossene Stränge aus Stahl in Stranggießanlagen unterteilt werden. Diese überwiegend heißen Brammen und Blöcke werden üblicherweise durch Sauerstoffschneidbrenner an einer Brennschneidmaschine abgetrennt. Bei einer solchen Brennschneidmaschine verwandelt ein Sauerstoffschneidstrahl bzw. ein Schneidflamme den auf Zündtemperatur gebrachten Stahl in eine abfließende Oxydschlacke und erzeugt so eine Fuge, die bei Bewegung in einen Schnitt auswächst. Die Konstruktion der Brennscheidmaschine ist speziell auf das Brennschneiden von Rund-, Quadrat- und Rechteckformaten mit Durchmessern und Querschnitten bis etwa 350 mm ausgerichtet.

Um den Druck und die Durchflussmenge des Heizgases und des Heizsauerstoffes für den Schneidbrenner zu steuern, werden Druckminderer verwendet. Der Druckminderer wird nur einmal eingestellt und arbeitet nach dieser Einstellung, nämlich mit der immer gleichen Gasmenge und dem gleichen Gasdruck.

Während des Brennschneidvorganges am Gießstrang bzw. Werkstück, im Folgenden nur als Werkstück bezeichnet, treten an dessen Anfang und am Ende kalte Bereiche auf, da diese vom Schneidbrenner noch gar nicht oder nicht hinreichend erwärmt wurden. Besonders am Anfang des Brennschneidvorganges wird daher Heizgas und Heizsauerstoff mit hohem Druck und Menge benötigt, damit eine schnelle Erwärmung des Werkstückes erfolgt und die erforderliche Zündtemperatur zum Brennschneiden möglichst schnell erreicht wird.

Da aber zur Steuerung des Druckes und der Durchflussmenge des Heizgases und des Heizsauerstoffes für den Schneidbrenner statisch eingestellte Druckminderer verwendet werden, die während des Brennschneidvorganges dem Schneidbrenner Heizgas und Heizsauerstoff mit stets gleichem Druck und gleicher Menge zur Verfügung stellen, leidet darunter die Qualität der Schnittfläche am Werkstück. So ist die Schnittfläche vor allem am Anfang und am Ende des Brennschneidvorganges unbefriedigend. Vielmehr sollte aber die gesamte Schnittfläche eine gleich bleibend gute Qualität aufweisen.

Die EP-A-0 188 763 beschreibt ein Verfahren zum Betreiben einer Sauerstoff-Brennschneidmaschine zum Brennschneiden von Gießsträngen und Werkstücken aus Stahl, wobei der Druck und die Durchflussmenge des Heizgases und des Heizsauerstoffs während des Brennschneidvorganges am Gießstrang reduziert werden.

Nachteilig ist darüber hinaus, dass unnötig große Mengen an Heizgas und Heizsauerstoff verbraucht werden, die natürlich um so größer sind, je größer der Druck der verwendeten Gase beim Brennschneiden ist.

Es ist Aufgabe der Erfindung, ein Verfahren der eingangs genannten Art zur Verfügung zu stellen, die für eine gleich bleibend gute Qualität der Schnittfläche am Werkstück sorgt und die benötigten Mengen an Gas für das Brennschneiden verringert.

Erfindungsgemäß wird die Aufgabe durch ein Verfahren gelöst, bei dem der Druck und die Durchflussmenge des Heizgases und des Heizsauerstoffes während des Brennschneidvorganges am Gießstrang bzw. Werkstück reduziert werden, wobei der Druck und die Menge des Heizgases und des Heizsauerstoffes vom Beginn bis zum Ende des Schneidweges, nach einem ersten Teilbereich des Schneidweges, in dem der Druck und die Menge des Heizgases und des Heizsauerstoffes 100% betragen, schrittweise um mindestens 25% reduziert werden, wobei ein Schneidsauerstoffdruck während des Brennschneidvorganges konstant bleibt.

Durch dieses Verfahren wird eine optimale Einstellung der Schneidflamme der Schneiddüse des Schneidbrenners über die gesamte Scheidfläche des Werkstückes, d.h. vom Beginn bis zum Ende des Brennschneidvorganges erreicht.

Wie eingangs erläutert, treten am Anfang und am Ende des Werkstückes, einem Block oder einer Bramme, kalte Bereiche auf, da diese vom Schneidbrenner noch gar nicht oder nicht hinreichend erwärmt wurden. Somit wäre eine langsame Schneidgeschwindigkeit beim Anschneiden des Werkstückes, z.B. etwa 30 bis 50% der eigentlichen Schneidgeschwindigkeit, notwendig. Bei einem Werkstück mit einer Schneidkantenlänge von beispielsweise 200 mm, müsste die Schneidgeschwindigkeit auf einen Teilbereich von ca. 40 mm entsprechend verringert werden. Im zweiten Teilbereich von ca. 120 mm des Werkstückes müsste hingegen die maximale Schneidgeschwindigkeit auf 100% erhöht werden. Schließlich würde die Schneidgeschwindigkeit im dritten Teilbereich von ca. 40 mm des Werkstückes wieder auf etwa 30 bis 50% abgesenkt, damit immer noch eine gute Schneidfläche erzeugt wird.

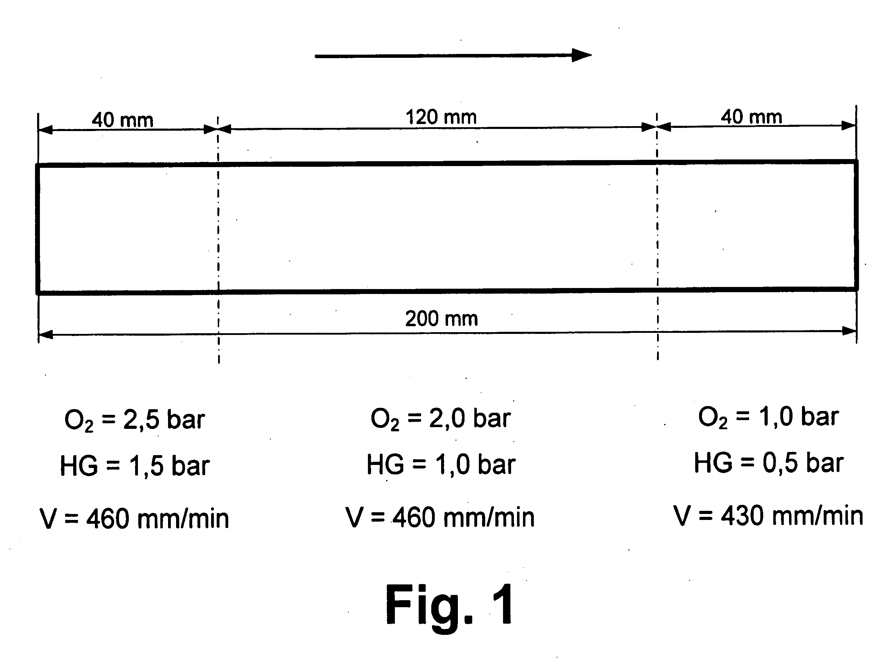

Gemäß dem erfindungsgemäßen Verfahren kann aber die Schneidgeschwindigkeit über die gesamte Schneidkantenlänge im Wesentlichen konstant bleiben. Hierzu werden der Druck und die Durchflussmenge des Heizgases und des Heizsauerstoffes während des Brennschneidvorganges am Gießstrang bzw. Werkstück verändert. Beispielhaft werden unter bisher durchgeführten Testbedingungen die Änderungen des Druckes - und damit folglich auch der vom Druck abhängigen Durchflussmenge - des Heizgases, z.B. Erdgas, und des Heizsauerstoffes am Schneidbrenner bei einem Werkstück aus St37 mit einer Schneidkantenlänge von 200 mm gemäß Fig. 1 erläutert, wobei der Schneidsauerstoffdruck konstant 15 bar beträgt:
Druckeinstellung im 1. Teilbereich des Werkstückes:

| | |
|---|---|
| Heizsauerstoff (O₂) | 2,5 bar |
| Heizgas (HG) | 1,5 bar |
| bei Schneidgeschwindigkeit (V) | 460 mm/min. |

Druckeinstellung im 2. Teilbereich des Werkstückes:

| | |
|---|---|
| Heizsauerstoff (O₂) | 2,0 bar (reduziert) |
| Heizgas (HG) | 1,0 bar (reduziert) |
| bei Schneidgeschwindigkeit (V) | 460 mm/min. |

Druckeinstellung im 3. Teilbereich des Werkstückes:

| | |
|---|---|
| Heizsauerstoff (O₂) | 1,0 bar (reduziert) |
| Heizgas (HG) | 0,5 bar (reduziert) |
| bei Schneidgeschwindigkeit (V) | 430 mm/min. |

Gegen Ende des Brennschneidvorganges wurde die Schneideschwindigkeit geringfügig reduziert.

Das Schneidverhalten des Schneidbrenners und die Schneidfläche können als sehr gut bezeichnet werden. Bei den genannten Druck- und Schneidgeschwindigkeitsparametern ist somit ein sicheres Brennschneiden mit gutem Ergebnis möglich. Trotz gegenüber dem herkömmlichen Brennscheidvorgang schnelleren Schneidens, da die Schneidgeschwindigkeit über die gesamte Schneidkante nahezu konstant gehalten wurde, erfolgte ein Reduzieren des Gasdruckes und der Gasmenge von Heizgas und Heizsauerstoff um mindestens 25%, nämlich:
1. Teilbereich
   Heizsauerstoff = 100%
   Heizgas = 100%
2. Teilbereich
   Heizsauerstoff = 80% --> 20% Reduzierung
   Heizgas = 66% --> 33% Reduzierung
3. Teilbereich
   Heizsauerstoff = 60% --> 40% Reduzierung
   Heizgas = 33% --> 66% Reduzierung.

Das wiederum bedeutet, dass der Heizgas- und Heizsauerstoffverbrauch auf mindestens 75% reduziert werden, also eine Reduzierung um mindestens 25% ermöglicht wird. Bei einer kontinuierlich betriebenen Brammen- oder Blockbrennschneidmaschine können so pro Schneidstrang mit zwei Schneidbrennern ca. 10.000 €/Jahr an Heizgas und Heizsauerstoff eingespart werden.

Weitere Merkmale und Vorteile der Erfindung ergeben sich aus den Unteransprüchen.

Gemäß einer weiteren Ausgestaltung des erfindungsgemäßen Verfahrens werden der Druck und die Durchflussmenge des Heizgases und des Heizsauerstoffes während des Brennschneidvorganges am Gießstrang bzw. Werkstück mittels eines Membran gesteuerten Druckmess- und Druckregelventils mit Druck- und Durchflussumsetzern und durch eine elektrische bzw. elektronische Steuerung geregelt und auf der Basis von vorbestimmten Referenzwerten wird eine Schneiddüse eines Schneidbrenners mit sich in Druck und Durchflussmenge veränderndem Heizgas und Heizsauerstoff versorgt. Hierdurch kann das Druckmess- und Druckregelventil von außen her ständig verändert werden.

Weiterhin wird zum schrittweisen Verändern des Druckes und der Durchflussmenge das Heizgas und der Heizsauerstoff während des Brennschneidvorganges auf das Membran gesteuerte Druckmess- und Druckregelventil über die Membran zu- und abgeführt, bis die Druckumsetzer und Durchflussumsetzer die jeweils erreichten Referenzwerte oder deren Abweichungen an die elektrische bzw. elektronische Steuerung melden, die auf der Basis der vorbestimmten Referenzwerte Vergleichs- und Einstell- oder Messwerte zur Steuerung der Veränderung von Zufuhr und Abfuhr des Heiz- und Sauerstoffgases verarbeitet.

Nach einer Weiterbildung des Verfahrens erzeugt das Membran gesteuerte Druckmess- und Druckregelventil mindestens zwei Druckbereiche, nämlich einen Druckbereich für das Anschneiden und einen Druckbereich für das Weiterschneiden des Gießstranges bzw. Werkstückes. Dies kann dadurch realisiert werden, dass die Membran des Druckmess- und Druckregelventils durch einen Vorregler gesteuert wird, der den Membranausschlag des Druckregelventils verändert. Dadurch kann gesteuert werden, dass weniger Heizgas und Heizsauerstoff an den Schneidbrenner gelangt.

Des Weiteren ist das Verfahren gekennzeichnet durch ein Membrane gesteuertes Druckmess- und Druckregelventil mit einem Ventilkörper, der eine obere Ventilkammer und eine untere Ventilkammer aufweist, und mit Ventilkuppel, einem federbelasteten Ventilstößel und mit Druck- und Durchflussumsetzern, die mit einer Steuerung verbunden sind, wobei die Membrane zum schrittweisen Verändern der Gasdurchflussmenge und des Gasdruckes durch ein Magnetventilpaar oder ein Proportionalventil, die mit der Steuerung verbunden sind, an der Ventilkuppel mit einem Druckgas zum Beeinflussen des Gasdurchflusses und Gasdruckes beaufschlagt ist,wobei der Druckumsetzer und der Durchflussumsetzer in der oberen Ventilkammer und der Druckumsetzer in der unteren Ventilkammer angeordnet ist.

Dadurch wird eine variable Versorgung des Schneidbrenners mit Heizgas und Heizsauerstoff ermöglicht. Wichtig hierbei ist auch, dass statt üblicher statisch einstellbarer Druckminderer für den Schneidbrenner regelbare Druck- und Durchflussumsetzer eingesetzt werden.

Nach einer weiteren Ausbildung der erfindungsgemäßen Verfahrens ist das Magnetventilpaar oder das Proportionalventil mit einer elektrischen bzw. elektronischen Steuerung verbunden, die auf der Basis vorbestimmter Referenzwerte Vergleichs- und Einstell- oder Messwerte zur Steuerung der Veränderung von Zufuhr und Abfuhr des Gases und gegebenenfalls zur Zustandserkennung und Zustandsmeldung verarbeitet.

Weiterhin ist wichtig, dass jeweils ein Membran gesteuertes Druckmess- und Druckregelventil für Heizgas und Heizsauerstoff zur Veränderung des Druckes und der Durchflussmenge des Heizgases und des Heizsauerstoffes während des Brennschneidvorganges vorgesehen sind.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zugrunde liegende Gedanke wird in der nachfolgenden Beschreibung anhand eines Ausführungsbeispieles, das in den Zeichnungen dargestellt ist, näher beschrieben. Es zeigen:
- Fig. 1: die schematische Darstellung der Änderung des Druckes des Heizgases und des Heizsauerstoffes an einem Werkstück, und

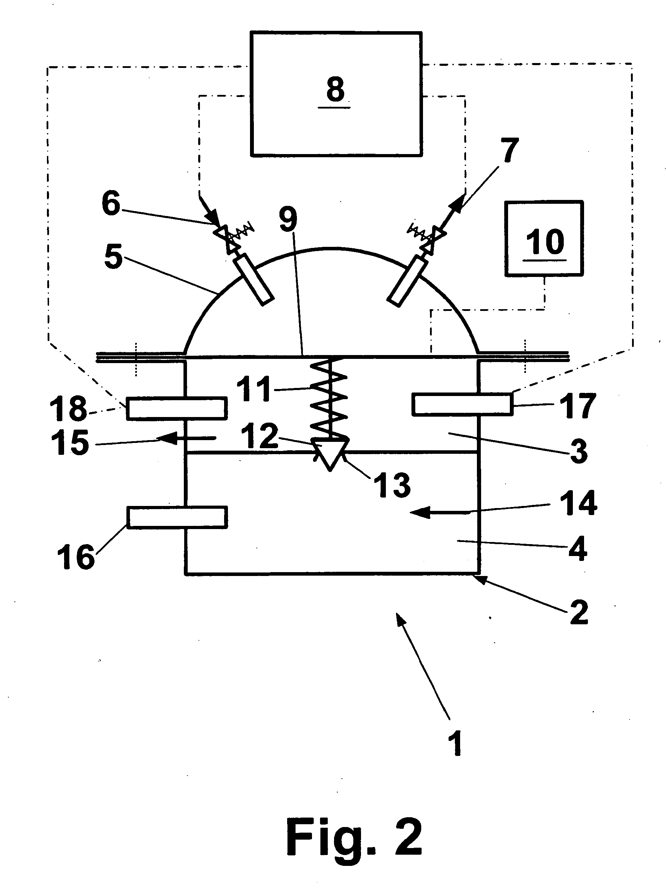

- Fig. 2: schematisch ein Membran gesteuertes Druckmess- und Druckregelventil für eine Einrichtung zum sicheren und sparsamen Sauerstoff-Brennschneiden von Gießsträngen und Werkstücken aus Stahl in kaltem und heißem Zustand in oder nach Stahl-Stranggießanlagen für Knüppel, Blöcke und Brammen.

Das Druckmess- und Druckregelventil 1 für Heizgas und Heizsauerstoff umfasst einen Ventilkörper 2 mit einer oberen Ventilkammer 3 und einer unteren Ventilkammer 4. Weiterhin ist am Ventilkörper 2 eine domartige Ventilkuppel 5 aufgesetzt. Diese weist ein Einlassventil 6 und ein Auslassventil 7 auf, die mit einer elektrischen bzw. elektronischen Steuerung 8 verbunden und als Magnetventil oder als Proportionalventil ausgebildet sind.

Zwischen der oberen Ventilkammer 3 und der Ventilkuppel 5 ist eine Membran 9 angeordnet, die mit einem Vorregler 10 in Verbindung steht, der den Membranausschlag des Druckmess- und Druckregelventils 1 verändert. Die Membran 9 wird zum schrittweisen Verändern der Gasdurchflussmenge und des Gasdruckes durch das Einlassventil 6 und das Auslassventil 7 an der Ventilkuppel 5 mit einem Druckgas zum Beeinflussen des Gasdurchflusses und Gasdruckes beaufschlagt.

An der Membran 9 stützt sich ein mit einer Druckfeder 11 belasteter Ventilstößel 12 ab, der eine Öffnung 13 zwischen der oberen Ventilkammer 3 und der unteren Ventilkammer 4 des Ventilkörpers 2 in Abhängigkeit von der Bewegung der Membran 9 öffnet und schließt. Dabei erfolgt ein Gaseintritt gemäß Pfeil 14 in die untere Ventilkammer 4 und ein Gasaustritt gemäß Pfeil 15 an der oberen Ventilkammer 3.

In der unteren Ventilkammer 4 sind ein Druckumsetzer 16 und an der oberen Ventilkammer 3 ein Druckumsetzer 17 und ein Durchflussumsetzer 18 angeordnet Diese sind mit der Steuerung 8 verbunden.

Mit Hilfe des Druckmess- und Druckregelventils 1 wird ein Gasstrom nach vorgegebenem Bezugswert in Durchflussdruck und damit auch in Durchflussmenge über den Gaseintritt 14 bzw. den Gasaustritt 15 gesteuert und geregelt. Der Bezugswert wird erzeugt durch das Zufließen eines Gasstromes mit höherem Druck über das Einlassventil 6 oder das Abfließen des vorhandenen Gases über das Auslassventil 7 zur Erzeugung eines niedrigeren Druckes über die Membrane 9.

Der Differenzdruck über und unter der Membrane 9 verstellt im Zusammenwirken mit der Druckfeder 11 die Öffnung 13 zur Veränderung des durchfließenden Gasstromes, so dass am Gasaustritt 15 die gewünschte Gasmenge mit gewünschtem Druck austritt. Die Druckumsetzer 16,17 und der Durchflussumsetzer 18 verwandeln die festgestellten Gasdrücke und Gasmengen in elektrische Signale, die an die Steuerung 8 weitergegeben werden, die einen Vergleich mit dort gespeicherten Einstellwerten erlaubt, aus dem dann Steuersignale zum Öffnen und Schließen des Einlassventils 6 und des Auslassventils 7 an der Ventilkuppel 5 des Druckmess- und Druckregelventils 1 abgegeben werden.

### Liste der Bezugszeichen

- 1: Druckmess- und Druckregelventil
- 2: Ventilkörper
- 3: obere Ventilkammer
- 4: untere Ventilkammer
- 5: Ventilkuppel
- 6: Einlassventil (Magnetventil)
- 7: Auslassventil (Magnetventil)
- 8: Steuerung
- 9: Membran
- 10: Vorregler
- 11: Druckfeder
- 12: Ventilstößel
- 13: Öffnung
- 14: Gaseintritt
- 15: Gasaustritt
- 16: Druckumsetzer
- 17: Druckumsetzer
- 18: Durchflussumsetzer

## Patentansprüche

1. Verfahren zum Betreiben einer Sauerstoff-Brennschneidmaschine zum Brennschneiden von Gießsträngen und Werkstücken aus Stahl in kaltem und heißem Zustand in oder nach Stahl-Stranggieß-anlagen für Blöcke und Brammen, **dadurch gekennzeichnet, dass** der Druck und die Durchflussmenge des Heizgases und des Heizsauerstoffes während des Brennschneidvorganges am Gießstrang bzw. Werkstück reduziert werden, wobei der Druck und die Menge des Heizgases und des Heizsauerstoffes vom Beginn bis zum Ende des Schneidweges, nach einem ersten Teilbereich des Schneidweges, in dem der Druck und die Menge des Heizgases und des Heizsauerstoffes 100% betragen, schrittweise um mindestens 25% reduziert werden, wobei ein Schneidsauerstoffdruck während des Brennschneidvorganges konstant bleibt.

2. Verfahren nach Anspruch 1, **dadurch gekennzeichnet, dass** der Druck und die Durchflussmenge des Heizgases und des Heizsauerstoffes während des Brennschneidvorganges am Gießstrang bzw. Werkstück mittels eines Membran (9) gesteuerten Druckmess- und Druckregelventils (1) mit Druck- und Durchflussumsetzern (16,17,18) und durch eine elektrische bzw. elektronische Steuerung (8) geregelt werden und auf der Basis von vorbestimmten Referenzwerten eine Schneiddüse eines Schneidbrenners mit sich in Druck und Durchflussmenge veränderndem Heizgas und Heizsauerstoff versorgt wird.

3. Verfahren nach Anspruch 1 oder 2, **dadurch gekennzeichnet, dass** zum schrittweisen Verändern des Druckes und der Durchflussmenge das Heizgas und der Heizsauerstoff während des Brennschneidvorganges auf das Membran (9) gesteuerte Druckmess- und Druckregelventil (1) über die Membran (9) zu- und abgeführt wird, bis die Druckumsetzer (16,17) und Durchflussumsetzer (18) die jeweils erreichten Referenzwerte oder deren Abweichungen an die elektrische bzw. elektronische Steuerung (8) melden, die auf der Basis der vorbestimmten Referenzwerte Vergleichs- und Einstell- oder Messwerte zur Steuerung der Veränderung von Zufuhr und Abfuhr des Heiz- und Sauerstoffgases verarbeitet.

4. Verfahren nach Anspruch 1, **dadurch gekennzeichnet, dass** das Membran (9) gesteuerte Druckmess- und Druckregelventil (1) mindestens zwei Druckbereiche erzeugt, nämlich einen Druckbereich für das Anschneiden und einen Druckbereich für das Weiterschneiden des Gießstranges bzw. Werkstückes.

5. Verfahren nach Anspruch 1, **dadurch gekennzeichnet, dass** die Membran (9) des Druckmess- und Druckregelventils (1) durch einen Vorregler (10) gesteuert wird.

6. Verfahren nach Anspruch 1, **gekennzeichnet durch** ein Membrane (9) gesteuertes Druckmess- und Druckregelventil (1) mit einem Ventilkörper (2), der eine obere Ventilkammer (3) und eine untere Ventilkammer (4) aufweist, und mit Ventilkuppel (5), einem federbelasteten Ventilstößel (12) und mit Druck- und Durchflussumsetzern (16,17,18), die mit einer Steuerung (8) verbunden sind, wobei die Membrane (9) zum schrittweisen Verändern der Gasdurchflussmenge und des Gasdruckes **durch** ein Magnetventilpaar (6,7) oder ein Proportionalventil, die mit der Steuerung (8) verbunden sind, an der Ventilkuppel (5) mit einem Druckgas zum Beeinflussen des Gasdurchflusses und Gasdruckes beaufschlagt ist, wobei der Druckumsetzer (17) und der Durchflussumsetzer (18) in der oberen Ventilkammer (3) und der Druckumsetzer (16) in der unteren Ventilkammer (4) angeordnet ist.

7. Verfahren nach Anspruch 6, **dadurch gekennzeichnet, dass** das Magnetventilpaar (6,7) oder das Proportionalventil mit einer elektrischen bzw. elektronischen Steuerung (8) verbunden ist, die auf der Basis vorbestimmter Referenzwerte Vergleichs- und Einstell- oder Messwerte zur Steuerung der Veränderung von Zufuhr und Abfuhr des Gases und gegebenenfalls zur Zustandserkennung und Zustandsmeldung verarbeitet.

8. Verfahren nach Anspruch 6, **dadurch gekennzeichnet, dass** jeweils ein Membran (9) gesteuertes Druckmess- und Druckregelventil (1) für Heizgas und Heizsauerstoff zur Veränderung des Druckes und der Durchflussmenge des Heizgases und des Heizsauerstoffes während des Brennschneidvorganges vorgesehen sind.

## Claims

1. A method for operating an oxygen cutting machine for oxygen cutting of cast strands and steel workpieces in cold and hot condition in or downstream of continuous steel casting plants for blooms and slabs, **characterized in that** the pressure and flow of the heating gas and the heating oxygen are reduced during the flame cutting process on the cast strand and/or workpiece with the pressure and quantity of the heating gas and the heating oxygen from the beginning to the end of the cutting path after a first portion of the cutting path, in which pressure and quantity of the heating gas and the heating oxygen are 100 %, are reduced stepwise by at least 25 %, whereby a pressure of the heating oxygen is constant during the cutting operation.

2. A method according to claim 1, **characterized in that** the pressure and flow of the heating gas and the heating oxygen are regulated during the cutting process on the cast strand and/or workpiece by means of a membrane (9) controlled pressure measuring and pressure regulating valve (1) with pressure and flow converters (16, 17, 18) and by an electric and/or electronic control system (8) and on the basis of predetermined reference values a cutting nozzle of a cutting torch is supplied with heating gas and heating oxygen varying in pressure and flow.

3. A method according to claim 1 or 2, **characterized in that** for stepwise variation of the pressure and flow, the heating gas and the heating oxygen during the cutting process is supplied and discharged via the membrane (9) to the membrane (9) controlled pressure measuring and pressure regulating valve (1) until the pressure converters (16, 17) and flow converter (18) report the reference values or their deviations reached each time to the electric and/or electronic control system (8) which on the basis of the predetermined reference values processes comparative and adjustment or measuring values for control of the variation of supply and discharge of the heating gas and the oxygen gas.

4. A method according to claim 1, **characterized in that** the membrane (9) controlled pressure measuring and pressure regulating valve (1) creates at least two pressure ranges, namely a pressure range for initial cutting and a pressure range for further cutting of the cast strand and/or workpiece.

5. A method according to claim 1, **characterized in that** the membrane (9) of the pressure measuring and regulating valve (1) is controlled by a pre-controller (10).

6. A method according to claim 1, **characterized by** a membrane (9) controlled pressure measuring and pressure regulating valve (1) with a valve body (2) having an upper valve chamber (3) and a lower valve chamber (4), and with valve dome (5), a spring-loaded push rod (12) and with pressure and flow converters (16, 17, 18) associated with a control system (8) with the membrane (9) on the valve dome (5) being charged with a compressed gas for influencing gas flow and gas pressure for stepwise modification of the gas flow quantity and gas pressure by a pair of solenoid valves (6, 7) or a proportional valve associated with the control system (8), with the pressure converter (17) and flow converter (18) being arranged in the upper valve chamber (3) and the pressure converter (16) being arranged in the lower valve chamber (4).

7. A method according to claim 6, **characterized in that** the pair of solenoid valves (6, 7) or the proportional valve is associated with an electric and/or electronic control system (8), processing comparative and adjustment or measured values on the basis of predetermined reference values for controlling variation of supply and discharge of the gas, and if necessary, for state detection and state information.

8. A method according to claim 6, **characterized in that** each one membrane (9) controlled pressure measuring and pressure regulating valve (1) for heating gas and heating oxygen are provided for variation of the pressure and flow quantity of the heating gas and the heating oxygen during the cutting process.

## Revendications

1. Procédé de fonctionnement d'une machine d'oxycoupage destinée à couper au chalumeau des barres de coulée et des pièces en acier à l'état froid et chaud, à l'intérieur ou à la suite d'installations de coulée continue d'acier pour lingots et brames, **caractérisé par le fait que** la pression et le débit du gaz de chauffage et de l'oxygène de chauffage sont réduits durant l'opération d'oxycoupage sur la barre de coulée ou bien la pièce, la pression et la quantité du gaz de chauffage et de l'oxygène de chauffage étant réduites pas à pas d'au moins 25 % depuis le début jusqu'à la fin du trajet de coupage, après une première partie du trajet de coupage dans laquelle la pression et la quantité du gaz de chauffage et de l'oxygène de chauffage sont de 100 %, une pression d'oxygène de coupage restant constante durant l'opération d'oxycoupage.

2. Procédé selon la revendication 1, **caractérisé par le fait que** la pression et le débit du gaz de chauffage et de l'oxygène de chauffage sont réglés, durant l'opération d'oxycoupage sur la barre de coulée ou bien la pièce, au moyen d'une vanne de mesure de pression et de réglage de pression (1) commandée par membrane (9) et comprenant des convertisseurs de pression et de débit (16, 17, 18), ainsi qu'au moyen d'une commande électrique ou bien électronique (8), et que, sur la base de valeurs de référence prédéterminées, une buse de coupe d'un chalumeau coupeur est alimentée en gaz de chauffage et en oxygène de chauffage variant en pression et en débit.

3. Procédé selon la revendication 1 ou 2, **caractérisé par le fait que**, pour faire varier pas à pas la pression et le débit, le gaz de chauffage et l'oxygène de chauffage sont amenés et évacués, durant l'opération d'oxycoupage, via la membrane (9), à ou bien de la vanne de mesure de pression et de réglage de pression (1) commandée par membrane (9), jusqu'à ce que les convertisseurs de pression (16, 17) et de débit (18) signalent les valeurs de référence respectivement atteintes ou les écarts de celles-ci à ladite commande électrique ou bien électronique (8) qui, sur la base des valeurs de référence prédéterminées, traite des valeurs de comparaison et de réglage ou de mesure pour commander la variation de l'alimentation et de l'évacuation du gaz de chauffage et d'oxygène.

4. Procédé selon la revendication 1, **caractérisé par le fait que** ladite vanne de mesure de pression et de réglage de pression (1) commandée par membrane (9) génère au moins deux zones de pression, à savoir une zone de pression pour le premier coupage et une zone de pression pour la continuation du coupage de la barre de coulée ou bien de la pièce.

5. Procédé selon la revendication 1, **caractérisé par le fait que** ladite membrane (9) de la vanne de mesure de pression et de réglage de pression (1) est commandée par le biais d'un pré-régulateur (10).

6. Procédé selon la revendication 1, **caractérisé par** une vanne de mesure de pression et de réglage de pression (1) commandée par membrane (9), comprenant un corps de vanne (2) qui présente une chambre supérieure de vanne (3) et une chambre inférieure de vanne (4), ainsi qu'un dôme de vanne (5), un poussoir chargé par ressort (12) et des convertisseurs de pression et de débit (16, 17, 18) qui sont reliés à une commande (8), ladite membrane (9) pour faire varier pas à pas le débit de gaz et la pression de gaz étant alimentée par une paire d'électrovannes (6, 7) ou par une valve proportionnelle qui sont reliées à ladite commande (8), sur le dôme de vanne (5), en un gaz comprimé pour influer sur le débit de gaz et la pression de gaz, le convertisseur de pression (17) et le convertisseur de débit (18) étant disposés dans la chambre supérieure de vanne (3) et le convertisseur de pression (16) étant disposé dans la chambre inférieure de vanne (4).

7. Procédé selon la revendication 6, **caractérisé par le fait que** la paire d'électrovannes (6, 7) ou la valve proportionnelle est reliée à une commande électrique ou bien électronique (8) qui, sur la base de valeurs de référence prédéterminées, traite des valeurs de comparaison et de réglage ou de mesure pour commander la variation de l'alimentation et de l'évacuation du gaz et, le cas échéant, pour repérer l'état et signaler l'état.

8. Procédé selon la revendication 6, **caractérisé par le fait que** l'on prévoit respectivement une vanne de mesure de pression et de réglage de pression (1) commandée par membrane (9) pour le gaz de chauffage et l'oxygène de chauffage pour faire varier la pression et le débit du gaz de chauffage et de l'oxygène de chauffage durant l'opération d'oxycoupage.
